# EUROPÄISCHE PATENTSCHRIFT

(11) **EP 2 908 976 B1**
(45) Veröffentlichungstag und Bekanntmachung des Hinweises auf die Patenterteilung: **25.04.2018**
(21) Anmeldenummer: 13780069.4
(22) Anmeldetag: 15.10.2013
(51) Int. Cl.: B23K 26/06, B23K 26/08, B23K 26/38

(54) **LASERSCHNEIDMASCHINE ZUM SCHNEIDEN VON WERKSTÜCKEN UNTERSCHIEDLICHER DICKE**
LASER CUTTING MACHINE FOR CUTTING WORKPIECES OF DIFFERENT THICKNESSES
MACHINE DE DECOUPE PAR LASER PERMETTANT DE DÉCOUPER DES PIÈCES DE DIFFÉRENTES ÉPAISSEURS

(30) Priorität: 19.10.2012 DE 102012219074
(43) Veröffentlichungstag der Anmeldung: 26.08.2015
(73) Patentinhaber: Trumpf Werkzeugmaschinen GmbH + Co. KG, 71254 Ditzingen (DE)
(72) Erfinder: HESSE, Tim, 71254 Ditzingen (DE); KAISER, Tobias, 71229 Leonberg (DE)
(74) Vertreter: Kohler Schmid Möbus Patentanwälte
(86) Internationale Anmeldenummer: PCT/EP2013/003094
(87) Internationale Veröffentlichungsnummer: WO 2014/060091

(56) Entgegenhaltungen:
- EP-A1- 0 778 564
- DE-A1-102010 003 750
- JP-A- H1 158 054
- JP-A- H05 305 475
- JP-A- H11 245 074
- JP-A- 2012 024 782
- US-A1- 2003 052 104

## Beschreibung

Die vorliegende Erfindung betrifft eine Laserschneidmaschine zum Schneiden von Werkstücken unterschiedlicher Dicke mittels eines Laserstrahles gemäß dem Oberbegriff des Anspruchs 1 (siehe z.B. JP2012/024782 A). Die industrielle Laserbearbeitung metallischer Werkstücke hat sich in den letzten Jahren aufgrund des technischen Fortschritts in diesem Bereich rasch weiter entwickelt. Mit dieser Entwicklung sind die Erwartungen bzw. Ansprüche an die zu bearbeitenden Werkstücke stetig gestiegen, sodass heute von den Kunden in immer kürzerer (Produktions-)Zeit immer individuellere, komplexer gestaltete Produkte bzw. Werkstücke gefordert werden. Damit geht auch einher, dass zu fertigende Werkstücke immer häufiger eine aufwändige Gestalt mit mindestens zwei oder mehr unterschiedlichen Werkstückdicken aufweisen oder dass einzelne Werkstücke jeweils mit einer definierten Werkstückdicke in immer kleineren Serien in kürzerer Zeit hergestellt werden müssen und insbesondere eine hohe Schneidqualität aufweisen sollen.

Zum Schneiden eines Werkstücks mit einer vergleichsweise großen Dicke (Dickbleche) ist in der Regel ein vergleichsweise großer Fokusdurchmesser des Bearbeitungslaserstrahls erwünscht, damit der Schnittspalt so breit ist, dass bei der Werkstückbearbeitung entstehende Schlacke ausgeblasen werden kann. Hingegen ist bei der Bearbeitung von Werkstücken mit vergleichsweise geringen Dicken (Dünnblechen), insbesondere zum schnellen Laserschneiden, ein vergleichsweise kleiner Fokusdurchmesser erwünscht.

Eine fortlaufende Umrüstung von Laserbearbeitungsmaschinen (von Maschinen mit kleinen Fokusdurchmessern hin zu Maschinen mit vergleichsweise größeren Fokusdurchmessern) ist jedoch aufgrund des unverhältnismäßig großen Aufwands keine gangbare Lösung, um den vorbeschriebenen Anforderungen an die Werkstückproduktion gerecht zu werden. Auch die schrittweise Bearbeitung eines Werkstücks mit unterschiedlichen Dicken auf zunächst einer ersten Laserbearbeitungsmaschine (z.B. eine Laserschneidmaschine mit einem kleinem Fokusdurchmesser) sowie anschließend (nach einem zwischenzeitlichen Transfer des Werkstücks) auf einer zweiten Laserbearbeitungsmaschine (mit einem vergleichsweise größeren Fokusdurchmesser) stellt keine wirtschaftlichere Alternative dar.

Daher ist es die Aufgabe der vorliegenden Erfindung, eine Laserschneidmaschine und ein Verfahren der eingangs genannten Art bereitzustellen, durch die das Schneiden von Werkstücken unterschiedlicher Dicke mittels eines Laserstrahls in sicherer, qualitativ hochwertiger, wirtschaftlicher und insbesondere schneller Art und Weise möglich ist. Eine Laserschneidmaschine gemäß der Erfindung ist im Anspruch 1 definiert. Durch die erfindungsgemäße Laserschneidmaschine wird die Laserstrahlcharakteristik (die Strahlqualität der Bearbeitungslaserstrahlen) in vorteilhafter Weise in Abhängigkeit von der Dicke des zu bearbeitenden Werkstücks verändert. Durch diese Veränderung der Laserstrahlcharakteristik, die vor Ort (in situ) und während der Werkstückbearbeitung erfolgen kann, entfällt ein umständliches Umrüsten der Laserschneidmaschine oder ein Transferieren des zu bearbeitenden Werkstückes von einer ersten Laserschneidmaschine in eine zweite Laserschneidmaschine.

Erfindungsgemäß wird eingangs bestimmt, in welche Dickenkategorie ein zu bearbeitendes Werkstück fällt. Beispielsweise können so genannte Dünnbleche mit einer Werkstückdicke kleiner als 20 mm in eine erste Dickenkategorie eingestuft und mittels des ersten Bearbeitungslaserstrahls bearbeitet werden. Entsprechend können so genannte Dickbleche mit einer Werkstückdicke größer als 20 mm in die zweite Dickenkategorie eingestuft und mittels des zweiten Bearbeitungslaserstrahls bearbeitet werden. Die Einrichtung, die die Bearbeitungslaserstrahlen unterschiedlicher Lasercharakteristik bildet, kann entweder durch die Steuerung, die in Abhängigkeit von der Werkstückdicke den Bearbeitungslaserstrahl mit der geeigneten Lasercharakteristik auswählt, angesteuert oder alternativ auch manuell betätigt werden.

Bei einer bevorzugten Ausführungsform umfasst die Laserschneidmaschine eine Schneidgasdüse, die einen Düsendurchmesser von mindestens 3 mm aufweist. Durch eine derartige Schneidgasdüse, die vorzugsweise nach dem Nebenstromprinzip arbeitet und im Betrieb einen vergleichsweise geringen Volumenstrom erfordert, ist in vorteilhafter Weise ein Laserschnitt mit hoher Schnittqualität (Schönschnitt) möglich. Durch das Laserschneiden mit einer Schneidgasdüse, die einen Düseninnendurchmesser größer 3 mm aufweist, wird eine größere Abdeckung des Schnittspalts erreicht. Zur weiteren Steigerung der Qualität des Schnittergebnisses wird die Schneidgasdüse bevorzugt während des Laserschneidens in einem Arbeitsabstand von weniger als 1 mm eingesetzt. Ferner kann zur weiteren Steigerung der Schnittqualität der Düsendurchmesser bei kleinen Werkstückdicken (z.B. Dicke kleiner als 20 mm) kleiner gewählt werden als bei großen Werkstückdicken (z.B. Dicke größer als 20 mm). Somit wird das Schneidgas optimal in den Schnittspalt eingekoppelt. Insbesondere können mit einer derartigen Laserschneidmaschine auch bei Dickblechen solch hohe Schnittqualitäten erzielt werden. Gemäß der Erfindung ist die Einrichtung durch eine verstellbare Ablenkoptik und eine Mehrfachfaser mit mehreren Fasern ausgebildet, und wobei der Rohlaserstrahl an dem einen Faserende der Mehrfachfaser durch die Ablenkoptik wahlweise in eine oder mehrere Fasern einkoppelbar und am anderen Faserende als Bearbeitungslaserstrahl mit unterschiedlicher Laserstrahlcharakteristik auskoppelbar ist. Durch die Mehrfachfaser und die Ablenkoptik kann erfindungsgemäß die Strahlqualität bzw. die Laserstrahlcharakteristik des Bearbeitungslaserstrahls in Abhängigkeit von der Dicke des zu bearbeitenden Werkstücks auf dem Strahlweg zwischen dem Erzeugungsort (der Laserquelle) und dem Bearbeitungsort (am Werkstück) verändert werden. Die Mehrfachfaser erübrigt die Anordnung einer beweglichen Linsen-Optik zur Fokusdurchmesserverstellung im Laserbearbeitungskopf, wodurch ein deutlich kleinerer (kompakterer) und leichterer Aufbau des Bearbeitungskopfs und somit höhere Bearbeitungsgeschwindigkeiten realisiert werden können. Gleichzeitig bleibt das komplette Bearbeitungsspektrum (Dick-/Dünnblech, Brenn-/ Schmelzschnitt) erhalten. Zur Einkopplung des Rohlaserstrahls in die Mehrfachfaser kann die Ablenkoptik beispielsweise als bewegbares Prisma bzw. als eine Keilplatte ausgebildet sein. Gemäß der Erfindung weist die Mehrfachfaser mehrere Einzelfasern mit unterschiedlich großen Querschnittsflächen und/oder Querschnittsformen auf. Zur Erzeugung der unterschiedlichen Laserstrahlcharakteristiken wird der Rohlaserstrahl wahlweise in eine oder mehrere der Einzelfasern mit unterschiedlich großen Querschnittsflächen und/oder Querschnittsformen eingekoppelt.

Bevorzugt ist ferner eine Weiterbildung, bei der die Mehrfachfaser mindestens vier Einzelfasern aufweist, von denen zwei erste Einzelfasern (nahezu) gleich große Querschnittsflächen mit jeweils unterschiedlichen Querschnittsformen aufweisen und von denen die anderen zwei zweiten Einzelfasern andere (nahezu) gleich große Querschnittsflächen mit jeweils unterschiedlichen Querschnittsformen aufweisen. Die zwei ersten Einzelfasern weisen jeweils erste gleich große Querschnittsflächen auf. Die zwei zweiten Einzelfasern weisen ebenfalls jeweils zwei gleich große Querschnittsflächen auf, wobei deren Querschnittsflächen größer (anders) als die Querschnittsflächen der ersten zwei Einzelfasern sind. Somit sind die ersten zwei Einzelfasern bzw. der durch diese Einzelfasern jeweils gebildete Bearbeitungslaserstrahl beispielsweise für Dünnbleche und die zweiten zwei Einzelfasern bzw. der durch diese Einzelfasern jeweils gebildete Bearbeitungslaserstrahl für Dickbleche einsetzbar. Dadurch, dass die ersten zwei und zweiten zwei Einzelfasern ferner jeweils unterschiedliche Querschnittsformen (zum Beispiel runde und rechteckige oder runde und ovale Querschnittsformen) aufweisen, können ferner Spezialanwendungen, wie zum Beispiel ein schnellerer Laserschnitt oder eine weiter gesteigerte Schneidqualität durchgeführt werden. Beispielsweise kann durch den mittels einer runden Einzelfaser erzeugten Bearbeitungslaserstrahl eine richtungsunabhängige Bearbeitung von dicken oder dünnen Werkstücken vorgenommen werden. Rechteckförmige Einzelfasern können hingegen für vergleichsweise schnelle Laserschnitte eingesetzt werden. Hierzu ist der Rohlaserstrahl entsprechend in die jeweiligen Einzelfasern einzukoppeln.

Weitere Vorteile der Erfindung ergeben sich aus den Ansprüchen, der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1a: eine Ausführungsform einer erfindungsgemäßen Laserschneidmaschine zum Schneiden von Werkstücken unterschiedlicher Dicke mit einer Einrichtung zum wahlweisen Erzeugen von zwei Bearbeitungslaserstrahlen unterschiedlicher Laserstrahlcharakteristik mittels Strahlformungselementen;
- Fig. 1b: eine Schneidgasdüse der Laserschneidmaschine aus Fig. 1a in einem vergrößerten Teilausschnitt;
- Fign. 2a, 2b: eine Einrichtung zum wahlweisen Erzeugen von Bearbeitungslaserstrahlen unterschiedlicher Lasercharakteristik aus dem gleichen Rohlaserstrahl mittels einer Doppelclad-Faser;
- Fig. 3: eine erfindungsgemäße Einrichtung zum wahlweisen Erzeugen von Bearbeitungslaserstrahlen unterschiedlicher Lasercharakteristik mittels einer aus mehreren Einzelfasern unterschiedlichen Durchmessers bestehenden Mehrfachfaser; und
- Fig. 4: eine weitere erfindungsgemäße Einrichtung zum wahlweisen Erzeugen von Bearbeitungslaserstrahlen unterschiedlicher Lasercharakteristik mittels einer aus mehreren Einzelfasern mit unterschiedlich großen Querschnittsflächen und/oder Querschnittsformen bestehenden Mehrfachfaser.

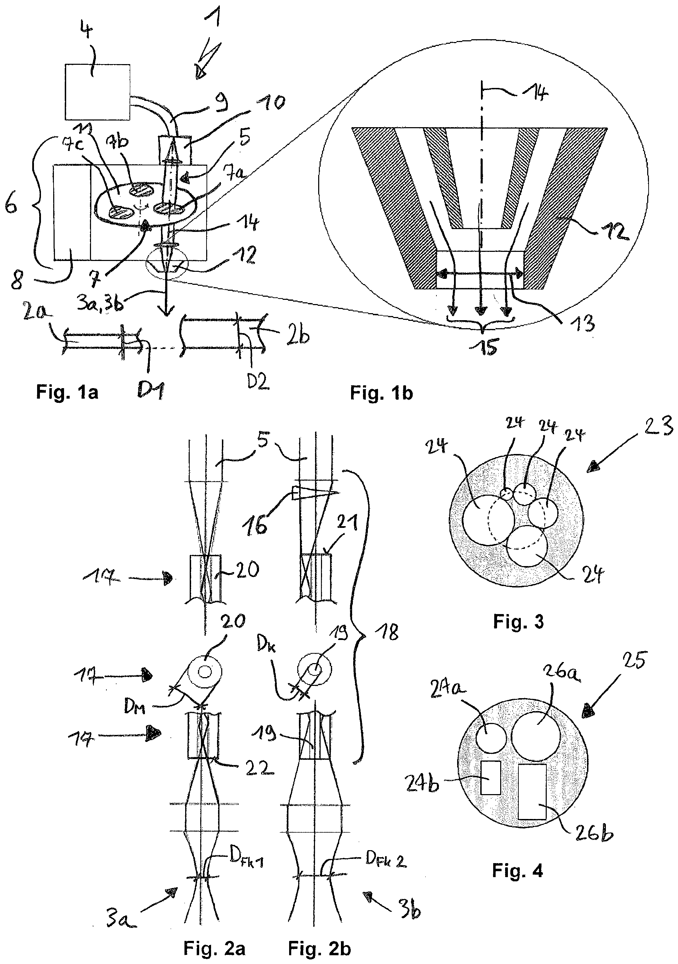

In der **Fig. 1a** ist eine Laserschneidmaschine **1** zum Laserschneiden von Werkstücken (z.B. Blechen) unterschiedlicher Dicke mittels eines Bearbeitungslaserstrahls dargestellt. Dabei werden Werkstücke **2a** mit einer geringeren Dicke **D1** mittels eines ersten Bearbeitungslaserstrahls **3a** und Werkstück **2b** mit einer größeren Dicke **D2** mittels eines zweiten Bearbeitungslaserstrahls **3b** bearbeitet. Die Laserschneidmaschine 1 weist eine Laserquelle **4** zur Erzeugung eines Rohlaserstrahls **5** sowie einen Bearbeitungskopf **6** zum Fokussieren der Bearbeitungslaserstrahlen 3a,3b auf das zu bearbeitende Werkstück 2a,2b auf. An dem Bearbeitungskopf 6 ist eine durch mehrere unterschiedliche Strahlformungselemente **7a-7c** gebildete Einrichtung **7** angeordnet, die aus dem Rohlaserstrahl 5 durch wahlweises Bewegen der Strahlformungselemente 7a-7c in den Strahlengang des Rohlaserstrahls 5 die Bearbeitungslaserstrahlen 3a, 3b mit einer ersten und mit einer zweiten Laserstrahlcharakteristik bildet. Die unterschiedlichen Laserstrahlcharakteristiken zeigen sich beispielsweise in unterschiedlichen Fokusdurchmessern und/oder Laserstrahldurchmessern und/oder Laserwellenlängen (vgl. Fign. 2a, 2b). Die Laserschneidmaschine 1 weist ferner eine Steuerung **8** auf, die die Einrichtung 7 in Abhängigkeit von der Dicke D1, D2 des zu schneidenden Werkstücks 2a, 2b ansteuert. Die Laserwellenlänge der Laserquelle 4 ist kleiner 4 µm, wobei es sich bei der Laserquelle 4 insbesondere um einen Festkörperlaser handelt.

Die Einrichtung 7 umfasst hier beispielhaft die drei unterschiedliche Strahlformungselemente 7a-7c, die diffraktive und/oder refraktive optische Elemente sein können. Es versteht sich, dass die Einrichtung 7 grundsätzlich auch durch ein einziges Strahlformungselement 7a, 7b oder 7c gebildet sein kann. Der über einen Lichtleiter **9** zugeführte Rohlaserstrahl 5 wird mittels eines Kollimators **10** als kollimierter Strahl ausgekoppelt, durchdringt anschließend das im Strahlengang befindliche Strahlformungselement 7a-7c, das den Laserstrahl jeweils in seiner Lasercharakteristik, z.B. in seiner Laserstrahlintensität, verändert, und wird über eine Fokussierlinse aus dem Bearbeitungskopf 6 als Bearbeitungslaserstrahl 3a,3b ausgekoppelt. Die drei Strahlformungselemente 7a-7c können, wie vorliegend, an einer Drehscheibe **11** vorgesehen sein, die in Abhängigkeit von der zu bearbeitenden Werkstückdicke D1, D2 durch einen Bediener manuell oder durch die Steuerung 8 gedreht wird, bis sich das jeweils gewünschte Strahlformungselement 7a-7c im Strahlengang befindet. Die Steuerung 8 ist vorteilhaft Teil der NC-Maschinensteuerung der Laserschneidmaschine 1, um entsprechend der programmierten Werkstückdicke eines auf der NC-Maschinensteuerung 8 ablaufenden NC-Programms entweder den einen oder den anderen Bearbeitungslaserstrahl 3a, 3b zu bilden. Alternativ kann die Steuerung 8 aber auch über nicht dargestellte Sensoren die Werkstückdicke erfassen und die Drehscheibe 11 entsprechend ansteuern. Beispielsweise können dünnere Bleche (Dünnbleche) mit einer Dicke D1 bis ca. 20 mm mittels des einen Bearbeitungslaserstrahls 3a und dickere Bleche (Dickbleche) mit einer Dicke D2 größer als ca. 20 mm mittels des anderen Bearbeitungslaserstrahls 3b bearbeitet werden.

Die Laserschneidmaschine 1 weist ferner eine Schneidgasdüse **12** auf, die einen Düsendurchmesser **13** von mindestens 3mm aufweist, und die in der **Fig. 1b** vergrößert dargestellt ist. Die Schneidgasdüse 12, die koaxial zur Laserstrahlachse **14** angeordnet ist, erzeugt einen Gasstrom **15,** der gegen die Oberfläche der zu bearbeitenden Werkstücke 2a,2b, insbesondere in einen in den Werkstücken 2a,2b gebildeten Schnittspalt, geleitet wird. Bevorzugt arbeitet die Schneidgasdüse 12 nach dem in der Fig. 1b schematisch dargestellten Nebenstromprinzip, sodass sie während des Laserschneidens einen vergleichsweise geringen Volumenstrom und somit einen nur geringen Schneidgasverbrauch erfordert. Durch die Schneidgasdüse 12 kann ein qualitativ hochwertiger Schnitt (beispielsweise ohne eine Gratbildung) nicht nur an Werkstücken 2a mit vergleichsweise geringer Dicke D1 (z.B. Dünnbleche) sondern auch an Werkstücken 2b mit größeren Dicken D2 (z.B. Dickbleche) erzeugt werden. Es versteht sich, dass alternativ zu der Schneidgasdüse 12 auch andere Schneidgasdüsen mit einem Düsendurchmesser 13 von mindestens 3mm eingesetzt werden können.

In den **Fign. 2a** und **2b** ist eine durch eine verstellbare Ablenkoptik **16** und eine Mehrfachfaser **17** gebildete Einrichtung **18** zum wahlweisen Erzeugen von Bearbeitungslaserstrahlen 3a, 3b unterschiedlicher Lasercharakteristik aus dem Rohlaserstrahl 5 gezeigt. Die Mehrfachfaser 17 ist als Doppelclad-Faser mit einer inneren Kernfaser **19** (Durchmesser **D_{K}**) und mit einer die innere Kernfaser 19 umgebenden äußeren Mantelfaser **20** (Außendurchmesser **D_{M}**) ausgebildet. An dem einen Faserende **21** der Mehrfachfaser 17 wird der Rohlaserstrahl 5 einer hier nicht gezeigten Laserquelle durch die Ablenkoptik 16 wahlweise in die Kernfaser 19 und/oder die Mantelfaser 20 eingekoppelt und tritt abhängig davon, in welche der Fasern 19, 20 der Rohlaserstrahl 5 eingekoppelt wurde, mit unterschiedlichen Laserstrahlcharakteristiken, z.B. mit unterschiedlichen Laserstrahldurchmessern bzw. Fokusdurchmessern **D_{FK1}**, **D_{FK2}**, an dem anderen Faserende **22** als Bearbeitungslaserstrahl 3a oder 3b aus. Zur wahlweisen Einkopplung in die Fasern 19,20 der Mehrfachfaser 17 kann die von der Steuerung 8 angesteuerte oder alternativ manuell durch einen Bediener betätigbare Ablenkeinrichtung 16, z.B. in Form einer in den Strahlengang des Rohlaserstrahls 5 bewegbare Keilplatte 16, vorgesehen sein. Als besonders vorteilhaft zur Erzeugung unterschiedlicher Lasercharakteristiken haben sich Mehrfachfasern 17 erwiesen, die eine Kernfaser 19 mit möglichst kleinem Faserkerndurchmesser D_{K} <100µm und eine Mantelfaser 20 mit einem Außendurchmesser D_{M} größer als der dreifache Faserkerndurchmesser D_{K} aufweisen.

Wird der Rohlaserstrahl 5 beispielsweise nur in die Kernfaser 19 eingekoppelt, so ergibt sich ein kleiner Fokusdurchmesser D_{FK1} mit einer hohen Strahlqualität, was bei hohen Vorschubgeschwindigkeiten und bei der Laserbearbeitung von Dünnblechen (D1 ≤ 20 mm) vorteilhaft ist. Wird der Rohlaserstrahl 5 in die Mantelfaserfaser 20 eingekoppelt, so ergibt sich ein größerer Fokusdurchmesser D_{FK2} mit vergleichsweise geringerer Strahlqualität, was wiederum bei geringeren Vorschubgeschwindigkeiten und bei der Laserbearbeitung von Dickblechen (D2 > 20 mm) vorteilhaft ist. Besonders günstig wirkt sich der große Fokusdurchmesser D_{FK2} dadurch aus, dass Fokuslagen nahe der Blechoberseite gewählt werden können, wodurch ein Einlauf der Schnittkante an der Blechoberseite vermieden werden kann. Durch den großen Schnittspalt kann ferner der Gasdruck beim Laserbearbeiten geringer gewählt werden.

Es versteht sich, dass anstelle der gezeigten Doppelclad-Faser auch Mehrfachclad-Fasern, die eine innere Kernfaser und mehrere äußere Mantelfasern aufweisen, gemäß der Erfindung vorgesehen sein können, sodass durch wahlweises Einkoppeln in diese Fasern viele unterschiedliche Laserstrahlcharakteristiken erzeugt werden können. Ebenso ist es möglich, dass die innere Kernfaser sowie die äußere Mantelfaser abweichend von dem runden Querschnitt auch andere Querschnittsformen und/oder Querschnittsflächen aufweisen können. Beispielsweise sind ovale und/oder rechteckige Querschnittsformen denkbar.

Statt der in den Fign. 2a und 2b gezeigten Doppelclad-Faser 17 kann zur Erzeugung unterschiedlicher Lasercharakteristiken auch die in **Fig. 3** gezeigte Mehrfachfaser **23** eingesetzt werden, die eine Vielzahl an parallelen Einzelfasern **24** mit jeweils unterschiedlich großen Durchmessern aufweist. Analog zu den Fign. 2a und 2b kann ein Rohlaserstrahl wahlweise in eine oder mehrere der Einzelfasern 24 eingekoppelt und als Bearbeitungslaserstrahlen mit jeweils unterschiedlichen Laserstrahlcharakteristiken ausgekoppelt werden.

Statt der in den Fign. 2a,2b,3 gezeigten Mehrfachfasern 17,23 kann schließlich zur Erzeugung unterschiedlicher Lasercharakteristiken auch die in **Fig. 4** gezeigte Mehrfachfaser **25** eingesetzt werden, die mindestens vier Einzelfasern aufweist, von denen zwei erste Einzelfasern **26a,26b** gleich große Querschnittsflächen mit jeweils unterschiedlichen Querschnittsformen (hier ein großer kreisförmiger und ein großer rechteckiger Querschnitt) aufweisen und von denen die anderen zwei zweiten Einzelfasern **27a,27b** andere gleich große Querschnittsflächen mit jeweils unterschiedlichen Querschnittsformen (hier ein kleiner kreisförmiger und ein kleiner rechteckiger Querschnitt) aufweisen. Der durch die ersten zwei Einzelfasern 26a,26b jeweils gebildete Bearbeitungslaserstrahl kann beispielsweise für Dickbleche D2 und der durch die zweiten zwei Einzelfasern 27a,27b jeweils gebildete Bearbeitungslaserstrahl für Dünnbleche D1 eingesetzt werden. Durch die unterschiedlichen Querschnittsformen (hier Kreisform und Rechteckform) können vorteilhaft unterschiedliche Spezialanwendungen beim Laserschneiden durchgeführt werden. Zum Beispiel ist beim Schneiden eines Dünnblechs D1 mit einem aus der kleinen runden Einzelfaser 27a ausgekoppelten Bearbeitungslaserstrahl ein richtungsunabhängiger Normalschnitt durchführbar, wohingegen mit einem aus der kleinen rechteckigen Einzelfaser 27b ausgekoppelten Bearbeitungslaserstrahl ein richtungsabhängiger, schnellerer Laserschnitt durchgeführt werden kann. Es versteht sich, dass auch mehr als zwei Querschnittsformen pro gleich große Querschnittsfläche oder mehr als zwei gleiche Querschnittsgrößen vorteilhaft eingesetzt werden können.

## Patentansprüche

1. Laserschneidmaschine (1) zum Schneiden eines Werkstücks (2a, 2b) mit einer ersten Dicke (D1, D2) mittels eines ersten Bearbeitungslaserstrahls (3a) mit einer ersten Laserstrahlcharakteristik (D_{FK1}) und eines Werkstücks (2b) mit einer anderen zweiten Dicke (D2) mittels mindestens eines zweiten Bearbeitungslaserstrahls (3b) mit einer anderen zweiten Laserstrahlcharakteristik (D_{FK2}), aufweisend: eine Laserquelle (4), insbesondere ein Festkörperlaser, zur Erzeugung eines Rohlaserstrahls (5) mit einer Laserwellenlänge kleiner 4 µm, einen Bearbeitungskopf (6) und eine Einrichtung (18), die aus dem Rohlaserstrahl (5) die Bearbeitungslaserstrahlen (3a, 3b) mit der ersten und mit der zweiten Laserstrahlcharakteristik (D_{FK1},D_{FK2}) bildet, und eine Steuerung (8), die die Einrichtung (18) in Abhängigkeit von der Dicke (D1, D2) des zu schneidenden Werkstücks (2a, 2b) ansteuert,
**dadurch gekennzeichnet,**
**dass** die Einrichtung (18) durch eine verstellbare Ablenkoptik (16) und eine Mehrfachfaser (23;25) mit mehreren, einander parallelen Einzelfasern (24;26,27) ausgebildet ist, welche unterschiedlich große Vollquerschnittsflächen und/oder Vollquerschnittsformen aufweisen, wobei der Rohlaserstrahl (5) an dem einen Faserende (21) der Mehrfachfaser (23;25) durch die Ablenkoptik (16) wahlweise in eine oder mehrere Einzelfasern (24;26,27) einkoppelbar und am anderen Faserende (22) als Bearbeitungslaserstrahl (3a, 3b) mit unterschiedlicher Laserstrahlcharakteristik (D_{FK1}, D_{FK2}) auskoppelbar ist.

2. Laserschneidmaschine nach Anspruch 1 mit einer Schneidgasdüse (12), die einen Düsendurchmesser (13) von mindestens 3 mm aufweist.

3. Laserschneidmaschine nach Anspruch 1 oder 2, **dadurch gekennzeichnet, dass** die Mehrfachfaser (25) mindestens vier Einzelfasern (26a,26b,27a,27b) aufweist, von denen zwei erste Einzelfasern (26a,26b) gleich große Querschnittsflächen mit jeweils unterschiedlichen Querschnittsformen aufweisen und von denen die anderen zwei zweiten Einzelfasern (27a,27b) andere gleich große Querschnittsflächen mit jeweils unterschiedlichen Querschnittsformen aufweisen.

## Claims

1. Laser cutting machine (1) for cutting a workpiece (2a, 2b) having a first thickness (D1, D2) by means of a first processing laser beam (3a) having a first laser beam characteristic (D_{FK1}) and a workpiece (2b) having a different second thickness (D2) by means of at least a second processing laser beam (3b) having a different second laser beam characteristic (D_{FK2}), comprising a laser source (4), in particular a solid-state laser, for producing a raw laser beam (5) having a laser wavelength of less than 4 µm, a processing head (6) and a device (18) which forms from the raw laser beam (5) the processing laser beams (3a, 3b) having the first and the second laser beam characteristic (D_{FK1}, D_{FK2}), and a control unit (8) which controls the device (18) in dependence on the thickness (D1, D2) of the workpiece (2a, 2b) to be cut,
**characterized in that**
the device (18) is formed by an adjustable optical deflection unit (16) and a multiple fibre (23; 25) having a plurality of individual parallel fibres (24; 26, 27) with full cross-sectional areas and/or full cross-section shapes of different sizes, with the raw laser beam (5) being able to be coupled at one fibre end (21) of the multiple fibre (23; 25) by the optical deflection unit (16) selectively into one or more individual fibres (24; 26, 27) and to be decoupled at the other fibre end (22) as a processing laser beam (3a, 3b) having a different laser beam characteristic (D_{FK1}, D_{FK2}).

2. Laser cutting machine according to claim 1, comprising a cutting gas nozzle (12) which has a nozzle diameter (13) of at least 3 mm.

3. Laser cutting machine according to claim 1 or 2, **characterised in that** the multiple fibre (25) has at least four individual fibres (26a, 26b, 27a, 27b), two first individual fibres (26a, 26b) of which have cross-sectional areas of the same size each with different cross-section shapes and the other two second individual fibres (27a, 27b) of which have different cross-sectional -areas of the same size each with different cross-section shapes.

## Revendications

1. Machine de découpe au laser (1) permettant de découper une pièce (2a, 2b) d'une première épaisseur (D1, D2) au moyen d'un premier faisceau laser d'usinage (3a) ayant une première caractéristique de faisceau laser (D_{FK1}) et une pièce (2b) d'une autre deuxième épaisseur (D2) au moyen d'au moins un deuxième faisceau laser d'usinage (3b) ayant une autre deuxième caractéristique de faisceau laser (D_{FK2}), présentant : une source laser (4), en particulier un laser à solide, permettant de produire un faisceau laser brut (5) d'une longueur d'onde laser inférieure à 4 µm, une tête d'usinage (6) et un dispositif (18) qui, à partir du faisceau laser brut (5), forme les faisceaux laser d'usinage (3a, 3b) ayant la première et la deuxième caractéristique de faisceau laser (D_{FK1}, D_{FK2}), et une commande (8) qui commande le dispositif (18) en fonction de l'épaisseur (D1, D2) de la pièce (2a, 2b) à découper,
**caractérisée en ce**
**que** le dispositif (18) est formé par une optique de déviation réglable (16) et une fibre multiple (23 ; 25) comportant plusieurs fibres individuelles (24 ; 26 ; 27) parallèles les unes aux autres, qui présentent des surfaces de section transversale pleine et/ou des formes de section transversale pleine de tailles différentes, le faisceau laser brut (5) pouvant, à une extrémité de fibre (21) de la fibre multiple (23 ; 25), être injecté par l'optique de déviation (16) au choix dans une ou plusieurs fibres individuelles (24 ; 26 ; 27) et, à l'autre extrémité de fibre (22), extrait en tant que faisceau laser d'usinage (3a, 3b) ayant une caractéristique de faisceau laser (D_{FK1}, D_{FK2}) différente.

2. Machine de découpe au laser selon la revendication 1, comprenant une buse de gaz de coupe (12) qui présente un diamètre de buse (13) d'au moins 3 mm.

3. Machine de découpe au laser selon la revendication 1 ou 2, **caractérisée en ce que** la fibre multiple (25) présente au moins quatre fibres individuelles (26a, 26b, 27a, 27b), dont deux premières fibres individuelles (26a, 26b) présentent des surfaces de section transversale de même taille avec des formes de section transversale différentes et dont les deux autres deuxièmes fibres individuelles (27a, 27b) présentent d'autres surfaces de section transversale de même taille avec des formes de section transversale différentes.
